# EUROPEAN PATENT APPLICATION

(11) **EP 4 607 509 A1**
(43) Date of publication of application: **27.08.2025**
(21) Application number: 25158549.3
(22) Date of filing: 18.02.2025
(51) Int. Cl.: G10L 15/22, G10L 15/26

(54) **PROVIDING GENERATIVE CONTENT WITHIN A VOICE CAPTURE SESSION USING LARGE GENERATIVE MODELS**

(30) Priority: 26.02.2024 US 202463558009 P; 06.09.2024 US 202418827124
(71) Applicant: Microsoft Technology Licensing, LLC, Redmond, WA 98052-6399 (US)
(72) Inventor: IFTIME, Iustin Alexandru, Redmond, 98052-6399 (US); TAWFIK, Ahmed Yassin, Redmond, 98052-6399 (US); TALMACEL, Iosif, Redmond, 98052-6399 (US); OSBORNE, Joseph Hayyim Benedict, Redmond, 98052-6399 (US)
(74) Representative: Murgitroyd & Company

(57) **Abstract**

This disclosure describes the utilization of a voice-based generative system (e.g., an Al voice system) to improve the functionality of voice-based input environments by utilizing generative Al models to provide generative content as inputs. For instance, the voice-based generative system enables the incorporation of generative Al model content and features into voice-based input environments, such as speech-to-text environments. For example, the voice-based input environments provide flexibility to previously limited environments and applications by allowing speech-to-text to seamlessly change the tone of dictated speech, automatically compose new content, answer queries, generate images, and create memes within a voice capture session. The voice-based generative system automatically detects, processes, and performs operations to provide generative content without requiring a user to move away from their current user interface or provide additional physical input.

## Description

### CROSS-REFERENCE TO RELATED APPLICATIONS

This application claims benefit and priority to Provisional Application Number 63/558,009, filed on February 26, 2024, the entirety of which is incorporated herein by reference.

### BACKGROUND

The landscape of computational devices has experienced significant advancements in both hardware and software domains, particularly in the implementation of generative artificial intelligence (AI) models for task execution, including generative content. The increased proficiency of generative AI models has resulted in their widespread integration across numerous systems and applications. However, there is a need to incorporate generative AI models in various environments to improve safety and efficiency, such as environments that require hands-free input.

### BRIEF DESCRIPTION OF THE DRAWINGS

The following detailed description provides specific and detailed implementations accompanied by drawings. Additionally, each of the figures listed below corresponds to one or more implementations discussed in this disclosure.
FIG. 1 illustrates an example overview of a voice-based generative system that uses generative artificial intelligence (AI) models to provide generative content within voice capture sessions.
FIG. 2 illustrates an example computing environment where the voice-based generative system is implemented.
FIG. 3 illustrates an example sequence diagram of generating content using a generative AI model based on a voice sample.
FIGS. 4A-4B illustrate an example sequence diagram of using a generative AI model to change the written tone of captured speech input based on a text tone change voice command captured in the same voice capture session.
FIGS. 5A-5F illustrate an example graphical user interface flow of changing the written tone of captured speech input based on a text tone change voice command captured in the same voice capture session.
FIGS. 6A-6D illustrate an example of graphical user interfaces on a mobile device changing the written tone of captured speech input based on speech captured in the same voice capture session.
FIGS. 7-8 illustrate an example series of acts of computer-implemented methods for providing generative content for one or more voice samples in a voice capture session.
FIG. 9 illustrates example components included within a computer system used to implement the voice-based generative system.

### DETAILED DESCRIPTION

This disclosure describes utilizing a voice-based generative system (e.g., an AI voice system) to improve the functionality of voice-based input environments by utilizing generative AI models to provide generative content as inputs. For instance, the voice-based generative system enables the incorporation of generative AI model content and features into voice-based input environments, such as speech-to-text environments. For example, the voice-based input environments provide flexibility to previously limited environments and applications by enabling speech-to-text to seamlessly change the tone of dictated speech, automatically compose new content, answer queries, generate images, and create memes within a voice capture session. The voice-based generative system automatically detects, processes, and performs operations to provide generative content without requiring a user to move away from their current user interface or provide additional physical input.

As a brief example, a user is using speech-to-text dictation to compose a message within a messaging thread to a recipient user. While dictating a new message, the user determines that they would like to enhance the message with generative content using generative AI model tools. Without providing any physical input, and without leaving the voice capture session or navigating away from the messaging thread user interface, the user provides a voice command to apply generative content. The voice-based generative system automatically detects the voice command as being different from dictation, processes the command to cause generation of content, and provides the generative content to the user. The user may accept (or reject) the generative content by adding it to the messaging thread. In some instances, the voice-based generative system automatically adds the generative content to the messaging thread (without requiring the user to press the send button).

To further illustrate, suppose a user is dictating a message in a speech-to-text environment and decides that they want to change the tone of the transcribed message. While in the voice capture session, the user verbally indicates that they want to modify or change the tone of the message. The voice-based generative system detects the request, or the voice command, and uses the generative AI model tools to provide the user with a modified version of the message for the user to send. During a voice capture session in the speech-to-text environment, the user may also desire the voice-based generative system to use the generative AI model tools to automatically generate a new message for them that includes text, images, and/or memes. In some instances, the voice-based generative system can also provide answers to queries without requiring the user to leave the current user interface, the voice capture session, or the messaging thread user interface.

Implementations of the present disclosure provide benefits and solve problems in the art with systems, computer-readable media, and computer-implemented methods that utilize a voice-based generative system that provides a framework that leverages generative AI models to generate and incorporate generative content within user-provided content obtained via speech dictation. For example, while dictating a message, the voice-based generative system enables the user to provide a voice command in the same voice capture session to modify and/or supplement the message.

To elaborate, in various implementations, the voice-based generative system receives a first voice sample and a second voice sample in a voice capture session (e.g., the same voice capture session). Based on determining that the first voice sample is speech-to-text dictation, the voice-based generative system provides a first text string of the first voice sample to be displayed (e.g., within a message or document). Additionally, based on determining that the second voice sample is a voice command, the voice-based generative system determines a command classification for the second voice sample. The voice-based generative system also provides a text modification prompt to a generative AI model based on the command classification. In an example, the text classification prompt includes the first text string and a second text string based on the second voice sample. Furthermore, based on receiving a modified first text string from the generative AI model in response to the text modification prompt, the voice-based generative system provides the modified first text string to be displayed.

In some implementations, the voice-based generative system receives, from a first user, a first voice sample and a second voice sample in a voice capture session associated with a messaging thread on a mobile device between the first user and at least one additional user. Based on determining that the first voice sample is speech-to-text dictation, the voice-based generative system provides a first text string of the first voice sample to be displayed within a message composition field of the messaging thread. Based on determining that the second voice sample is a voice command, the voice-based generative system determines a command classification type for the second voice sample, such as a text tone change classification. The voice-based generative system also provides a text modification prompt to a generative AI model based on the text tone change classification, which includes the first text string and a second text string based on the second voice sample.

In some instances, the text modification prompt instructs the generative AI model to change the tone of the first text string based on the context included in the second text string. In these instances, the voice-based generative system facilitates modifying the tone of the first text string to generate a modified text string using a generative AI model, and the voice-based generative system provides the modified first text string with the tone of the first text string changed to the user interface to be displayed. In some implementations, the voice-based generative system also replaces the first text string with the modified first text string within the message composition field of the messaging thread.

As described in this disclosure, the voice-based generative system delivers several significant technical benefits in terms of improved computing flexibility, accuracy, and efficiency compared to existing speech-to-speech systems. For example, the voice-based generative system provides generative content generation on mobile devices in speech-to-text applications (e.g., keyboard applications) that do not otherwise provide functionality beyond speech-to-text and/or predictive text.

The voice-based generative system is particularly beneficial in the mobile environment where screen space is limited, preventing the display of complex menus. For instance, the voice-based generative system allows users to implement generative content in a single voice capture session or continuous voice capture sessions. Indeed, the voice-based generative system automatically performs the operations needed to generate and retrieve requested generative content without requiring a user to move away from their current user interface. For example, without leaving a messaging user interface or providing physical input, the voice-based generative system obtains generative content, such as text, modified text, query answers, images, and/or memes.

Similar technical benefits apply to the document setting of personal computers as well as other computing environments. For example, a user provides dictation in a voice capture session that includes both dictation and voice commands. The voice-based generative system recognizes and processes the voice commands in the same voice capture session to obtain and return generative content (e.g., generative text, modified text, query answers, images, and/or memes) without any, or with only minimal, physical input.

As illustrated in the foregoing discussion, this disclosure utilizes a variety of terms to describe the features and advantages of one or more implementations described. To illustrate, this disclosure describes the voice-based generative system in the context of a cloud computing system.

As an example, a "voice sample" is a segment of a user's speech that is recorded and/or stored in an audio format. This could include individual words, phrases, sentences, or voice commands that are spoken by a user and picked up by a device's microphone. Voice samples may consist of speech intended for transcription (e.g., a speech-to-text dictation) or voice commands.

As an example, a "voice capture session" refers to a distinct, continuous, or aggregated time period during which one or more voice samples are recorded. It encompasses one or more voice samples that share a common theme, subject, topic, directive, or other forms of correlation. For instance, a voice capture session may include all voice samples recorded from the moment a microphone is activated until it is deactivated. In certain cases, a voice-based generative system may comprise multiple, continuous microphone activation sessions when the voice samples share a correlation. A voice capture session can include multiple user requests for speech-to-text dictation and/or multiple voice commands.

A voice capture session can provide a user interface that includes audio capture elements (e.g., a microphone icon or a pulsing microphone icon) that indicate the voice capture session is active. Thus, a user may provide multiple voice samples in the same voice capture session without leaving the voice capture session user interface. Similarly, if the voice capture session ends and the user starts a new voice capture session, in some instances, the two voice capture sessions may be aggregated into a combined, single voice capture session.

As an example, a "voice command" refers to a verbal instruction given to perform specific tasks or actions. In many instances, a voice command relates to the voice-based generative system using a generative AI model to create and provide generative content. Examples of voice commands include a text tone change voice command, an auto-compose text voice command, a user query voice command, an image creation voice command, an object creation voice command, a media creation voice command, and a meme generation voice command, each of which is further discussed below. Furthermore, voice commands are explicitly or implicitly identified in a voice sample and classified as a command classification type, as described further below.

As an example, the term "generative artificial intelligence model" (or "generative AI model") refers to a computational system that utilizes deep learning and a large number of parameters (e.g., billions or trillions for a large version and fewer for a small version) that are trained on one or more extensive datasets to produce coherent, contextually relevant, and fluent outputs (e.g., text and/or images) specific to a particular topic. In many cases, a generative AI model is an advanced computational system that uses natural language processing, machine learning, and/or image processing to generate human-like responses that are coherent and contextually relevant. For instance, generative AI models can create outputs in various formats, including one-word answers, long narratives, images, videos, labeled datasets, documents, tables, and presentations.

Moreover, generative AI models are primarily based on transformer architectures for understanding, generating, and manipulating human language. Generative AI models can also utilize other types of architectures such as recurrent neural network (RNN) architecture, long short-term memory (LSTM) model architecture, convolutional neural network (CNN) architecture, or other types of architectures. Examples of generative AI models include generative pre-trained transformer (GPT) models like GPT-3.5, GPT-4, and GPT-4o, bidirectional encoder representations from transformers (BERT) models, text-to-text transfer transformer models like T5, conditional transformer language (CTRL) models, and Turing-NLG. Other types of generative AI models include sequence-to-sequence models (Seq2Seq), vanilla RNNs, and LSTM networks. In some instances, a generative AI model includes a large language model (LLM), a small language model (SLM), and a small action model (SAM), which serve as text-based versions of a generative AI model, such as those that receive text prompts and/or generate text outputs. In various implementations, a generative AI model is a multimodal generative model that receives multiple input formats (e.g., text, images, video, data structures) and/or generates multiple output formats.

As an example, the term "image creation generative AI model" refers to a generative AI model that generates digital images from input prompts, such as text or audio input. As an example, the term "media creation generative model" refers to a generative AI model that generates digital media from input prompts, such as music, songs, videos with music or sound effects, and/or animated features. As an example, the term "object creation generative model" refers to a generative AI model that generates digital objects from input prompts, such as three-dimensional, four-dimensional, and n-dimensional objects. Other examples of digital objects include websites, stickers, software applications, simulations, machine-learning models, cryptocurrencies, virtual reality, or augmented reality objects.

As an example, the terms "generative AI model prompt" or "prompt" refer to a request provided to a large generative image model to create a generative AI model output based on a plain language guidance prompt. In some instances, the generative document system provides additional information with a prompt. A prompt can include a user-level prompt that includes a user request or a system-level or meta-level prompt that provides important context information and/or general framing information to ensure that the generative AI model understands the correct context, syntax, and grounding information of the data it is processing.

Examples of prompts include a classification generative AI model prompt for classifying captured voice commands, a text modification prompt for modifying user-dictated text due to context included in additional user-provided speech based on a text tone change voice command, a composition generative AI model prompt for generating new text content based on context included in an auto-compose text voice command, a query generative AI model prompt that generates query response answers based on a query included in a user query voice command, an image creation prompt, a generative image prompt that generates digital images based on context included in an image creation voice command, a generative object prompt that generates digital images based on context included in an object creation voice command, a generative media prompt that generates digital images based on context included in a media creation voice command, and a meme creation generative AI model prompt that generates a digital image with overlaid text based on context included in a meme generation voice command.

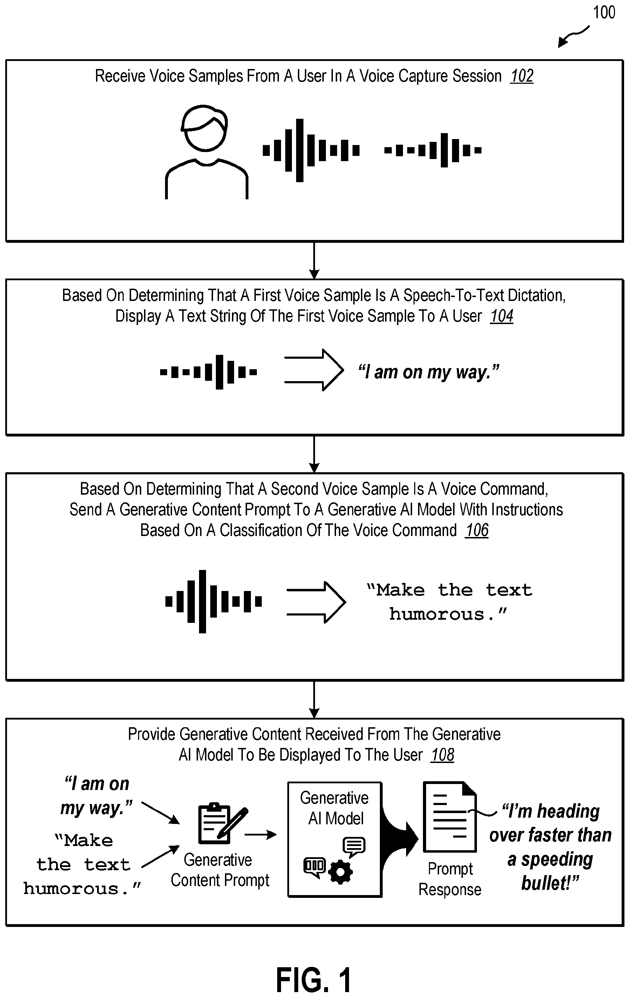

Implementation examples and details of the voice-based generative system are discussed in connection with the accompanying figures, which are described next. For example, FIG. 1 illustrates an example overview of a voice-based generative system that uses generative artificial intelligence (AI) models to provide generative content within voice capture sessions according to some implementations. While FIG. 1 provides a high-level overview of the invention, additional details are provided in subsequent figures. FIG. 1 illustrates a series of acts 100 performed by or with the voice-based generative system.

As shown, the series of acts 100 includes act 102 of receiving voice samples from a user in a voice capture session. For example, the voice samples include a speech-to-text dictation and a voice command, both in the same, single voice capture session. In some instances, the voice-based generative system receives captured audio from a user that includes either speech-to-text dictations and/or voice commands. In some implementations, the voice-based generative system receives multiple voice samples (e.g., a first voice sample and a second voice sample) in the same voice capture session.

Act 104 includes displaying a text string of the first sample to a user based on determining that the first voice sample is a speech-to-text dictation. For example, the voice-based generative system processes the first voice sample and determines that the user is providing dictation to convert to text and display on a computing device, such as a mobile phone. As a result, the voice-based generative system displays the converted text (i.e., the text string) on the user's device.

Act 106 includes sending a generative content prompt to a generative AI model with instructions to provide generative content based on the classification type of the voice command determined from the second voice sample as a voice command. For example, the second voice sample is determined to be a voice command to modify the text string. In various implementations, while the first voice sample is a dictation, the voice-based generative system may determine that the second voice sample includes a voice command. When a voice command is detected in a voice sample, the voice-based generative system may determine the type of voice command (e.g., a command classification). For example, the voice-based generative system determines that the voice command is classified as a text tone change voice command, an auto-compose text voice command, a user query voice command, an image creation voice command, or a meme generation voice command.

Additionally, in some implementations, the voice-based generative system generates a generative content prompt with instructions that correspond to the voice command classification, including specific requests of how to apply the voice command as found in the second voice sample. In some instances, the generative content prompt also includes the first text string, which is to be modified based on the voice command.

For example, based on determining that the second voice sample is a voice command to change the tone of the text string, the voice-based generative system generates a prompt with instructions for a generative AI model to modify the tone of the text string as indicated in the second voice sample. Using context from the voice command in the second voice sample, the generative AI model generates a modified text string as requested (e.g., make the message sound happy, light, formal, or casual, remove rambling, or correct spelling and grammar errors).

In response to providing the prompt to the generative AI model, the model provides generative content back to the voice-based generative system. The voice-based generative system then provides the generative content received from the generative AI model associated with the voice capture system to the user to be displayed, as shown in act 108. In some instances, the generative content adds to the first text string within a user interface (e.g., a messaging thread, digital document, or word-processing document). In some instances, the generative content modifies and/or replaces the first text string.

In the same voice capture session, or another voice capture session, the user may continue to provide voice samples that include a combination of dictation and voice commands. Moreover, the user may modulate or alternate between voice commands and dictation within the same voice session. The voice-based generative system will automatically detect the voice commands and apply them without the user requiring or providing any physical input or leaving the voice capture session interface.

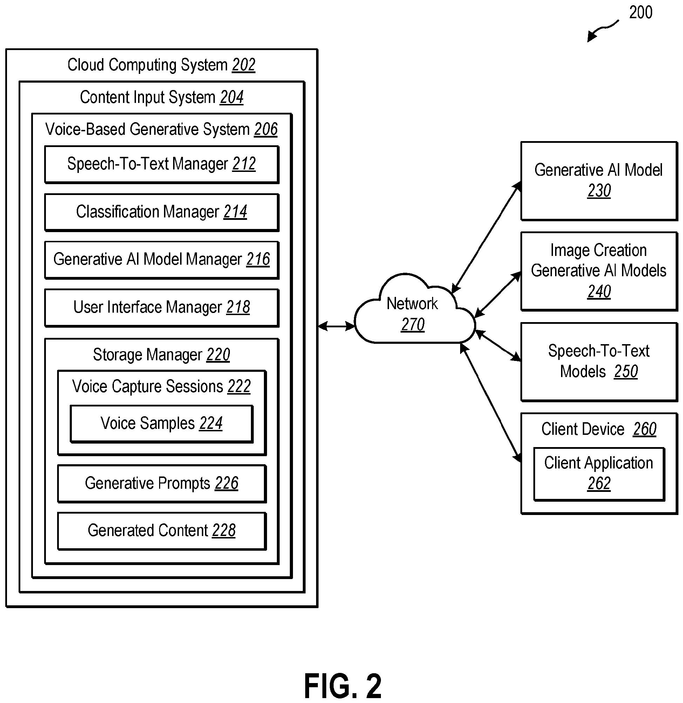

With a general overview in place, additional details are provided regarding the components, features, and elements of the voice-based generative system. To illustrate, FIG. 2 shows an example computing environment where the voice-based generative system is implemented according to some implementations. In particular, FIG. 2 illustrates an example of a computing environment 200 of various computing devices associated with a voice-based generative system 206. While FIG. 2 shows example arrangements and configurations of the computing environment 200, the voice-based generative system 206, and associated components, other arrangements and configurations are possible.

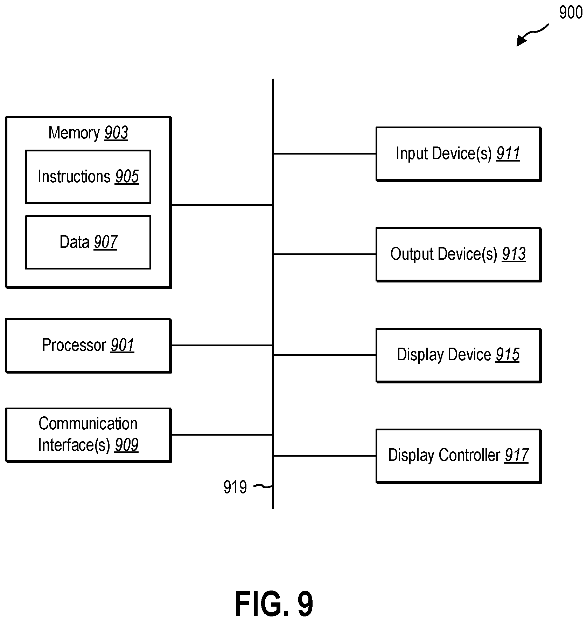

As shown, the computing environment 200 includes a cloud computing system 202 associated with the voice-based generative system 206, generative AI models 230, image creation generative AI models 240, speech-to-text models 250, and a client device 260 with a client application 262 connected via a network 270. Many of these components may be implemented on one or more computing devices, such as on one or more server devices. Some of these components may be implemented on a personal device. Further details regarding computing devices are provided below in connection with FIG. 9, along with additional details regarding networks, such as the network 270 shown.

Before describing components of the cloud computing system 202, including the voice-based generative system 206, other components of the computing environment 200 are first discussed. As shown, the cloud computing system 202 includes the generative AI models 230, which create generative outputs, such as text responses, based on prompt inputs. The voice-based generative system 206 may use the generative AI models 230 for a variety of generative tasks. For example, the voice-based generative system 206 utilizes the generative AI models 230 to generate new text strings based on prompts, change the tone or structure of current text strings, generate answers to queries, and generate memes, among other tasks.

As shown, the computing environment 200 includes the image creation generative AI models 240, which create generative images based on input prompts. In various implementations, the voice-based generative system 206 provides a prompt (e.g., an image creation prompt or a generative image prompt) to the image creation generative AI models 240 to generate a digital image based on the context provided in a corresponding voice command (e.g., an image creation voice command).

In some implementations, the image creation generative AI models 240 are or include object/media creation generative models. For example, a media creation generative model generates music, songs, videos with music or sound effects, and/or animated features. In another example, the media creation generative model performs audio, image, or video editing. An object creation generative model can create a three-dimensional, four-dimensional, or n-dimensional object. An object creation generative model can also create various objects, such as websites, stickers, software applications, simulations, machine-learning models, cryptocurrencies, virtual reality, or augmented reality objects.

The computing environment 200 also includes the speech-to-text models 250. In various implementations, the speech-to-text models 250 facilitate the conversion of audio to text. In some implementations, one or more speech-to-text models are located within the content input system 204 and/or the voice-based generative system 206. In some instances, a speech-to-text model is located on a client device.

As shown, the computing environment 200 includes the client device 260. In various implementations, the client device 260 is associated with a user (e.g., a user client device), such as a user who uses the voice-based generative system 206 to provide generative content while providing voice capture sessions and/or who accesses services of the cloud computing system 202. As also shown, the client device 260 includes a client application 262, such as a web browser, mobile application, or another form of computer application for accessing and/or interacting with the content input system 204 and/or the voice-based generative system 206.

In some implementations, the client application 262 is an application that uses the content input system 204 and/or the voice-based generative system 206. For example, the client application 262 is a keyboard software application that sends captured audio to the voice-based generative system 206. In some implementations, the client application 262 includes some or all of the features and functionality of the content input system 204 and/or the voice-based generative system 206.

Returning to the cloud computing system 202, as shown, the cloud computing system 202 includes a content input system 204, which provides users with tools to input content into computing systems and applications. For example, the content input system 204 is a keyboard application that facilitates character input, emoji input, and the input of other content. In various implementations, the content input system 204 accepts audio input, such as for speech-to-text. While the content input system 204 is shown on the cloud computing system 202, some or all of the cloud computing system 202 is located elsewhere, such as on the client device 260. For instance, the content input system 204 is located on the client device 260 with portions on the cloud computing system 202 that provide additional services and content.

As shown, the content input system 204 implements the voice-based generative system 206. In some implementations, the voice-based generative system 206 is located on a separate computing device from the content input system 204 within the cloud computing system 202 (or apart from the cloud computing system 202). In some implementations, the voice-based generative system 206 is located partially or wholly on the client device 260. In various implementations, the content input system 204 operates without the voice-based generative system 206.

As mentioned earlier, the voice-based generative system 206 provides generative content and features to users within voice capture sessions without needing physical input from a user, without needing the user to leave their current voice capture session, and without needing the user to navigate away from their current thread user interface. As shown, the voice-based generative system 206 includes various components and elements, which are implemented in hardware and/or software. For example, the voice-based generative system 206 includes a speech-to-text manager 212, a classification manager 214, a generative AI model manager 216, a user interface manager 218, and a storage manager 220. The storage manager includes voice capture sessions 222 with voice samples 224, generative prompts 226, and generative content 228.

The voice-based generative system 206 includes the speech-to-text manager 212, which generates text from user speech. For example, the speech-to-text manager 212 receives voice samples 224 from voice capture sessions 222 and communicates with the speech-to-text models 250 to convert captured speech to text. In some instances, a speech-to-text model is integrated within the voice-based generative system 206. In various implementations, the speech-to-text manager 212 is responsible for directly or indirectly obtaining text strings from the voice samples 224.

The classification manager 214 classifies or determines whether voice samples include voice commands and, if so, the type of voice command. In various implementations, the classification manager 214 analyzes text strings (e.g., converted text from voice samples) to determine whether it is a speech-to-text dictation ("dictation" for short) or a voice command. For example, the classification manager 214 determines whether a text string implicitly or explicitly includes a voice command, as further described below. If a voice command is detected, the classification manager 214 generates and provides a classification generative AI model prompt (e.g., based on one of the generative prompts 226) and the text string to the generative AI models 230 to determine the voice command type, which is further described later. In some implementations, the classification manager 214 is an orchestrator to determine, generate, and provide the classification generative AI model prompt to a generative AI model.

The generative AI model manager 216 communicates or interacts with the generative AI models 230 and the image creation generative AI models 240 to generate and receive generative content 228. For example, based on the voice command type, the generative AI model manager 216 determines which of the generative prompts 226 to use to generate a generative AI model prompt, which additional content to include in the prompt, and whether to call one of the generative AI models 230 and/or the image creation generative AI models 240 to obtain the generative content 228.

The user interface manager 218 facilitates presenting content, including generative content, to a client device. For example, the user interface manager 218 provides speech-to-text dictation (e.g., converted text) within text fields or areas of a client application 262 of the client device 260 (e.g., a message composition field of a messaging thread user interface). The user interface manager 218 may also provide generative content 228 with the same or different user interface fields or areas. For instance, the user interface manager 218 provides generative text or images within a separate user interface, such as a generative content user interface that provides the current status of requesting, processing, and creating generative content.

Each of the components of the voice-based generative system 206 includes software, hardware, or both. For example, the components of the voice-based generative system 206 can include one or more instructions stored on a computer-readable storage medium and executable by processors of one or more computing devices, such as a client device or server device. When executed by one or more processors, the computer-executable instructions of the components of the voice-based generative system 206 cause the computing device(s) to perform the methods described herein. Alternatively, the components of the voice-based generative system 206 can include hardware, such as a special-purpose processing device to perform a certain function or group of functions. Alternatively, the components of the voice-based generative system 206 can include a combination of computer-executable instructions and hardware.

Furthermore, the components of the voice-based generative system 206 may, for example, be implemented as one or more operating systems, as one or more stand-alone applications, as one or more modules of an application, as one or more plug-ins, as one or more library functions or functions that may be called by other applications, and/or as a cloud-computing model. Thus, the components of the voice-based generative system 206 may be implemented as a standalone application, such as a desktop or mobile application. Furthermore, the components of the voice-based generative system 206 may be implemented as one or more web-based applications hosted on a remote server. The components of the voice-based generative system 206 may also be implemented in a suite of mobile device applications or "apps."

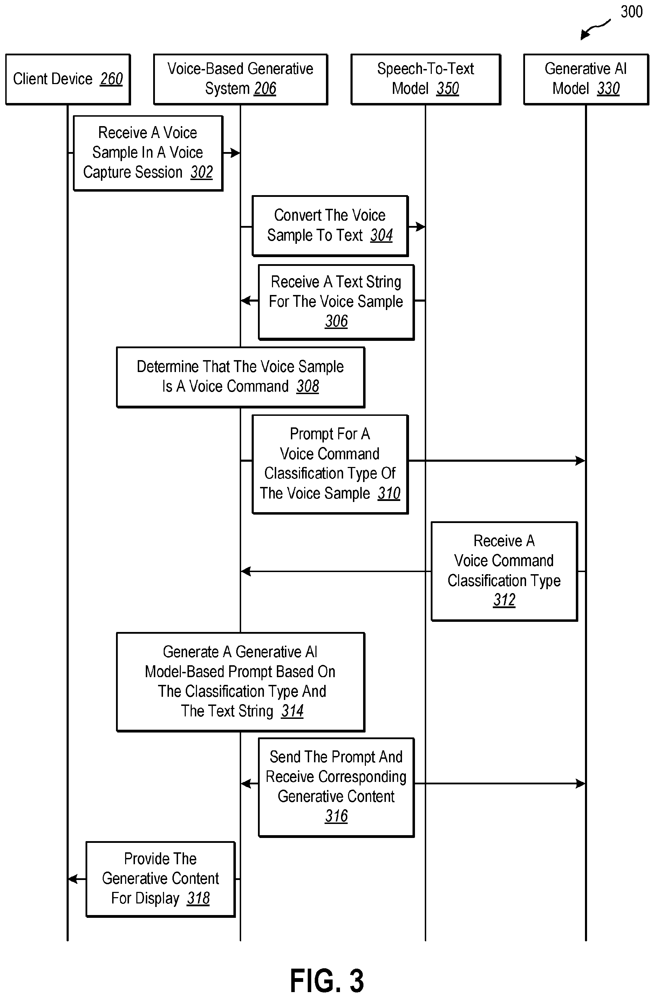

Turning to the next figures, additional details and examples are provided regarding providing generative content to users within voice capture sessions. For example, FIG. 3 illustrates an example sequence diagram of generating content using a generative AI model based on a voice sample. Subsequent figures provide additional examples of the voice-based generative system 206 generating specific types of generative content.

As shown, FIG. 3 includes various components in communication with each other, including the voice-based generative system 206 and the client device 260, which were introduced above. FIG. 3 also includes a generative AI model 330 and a speech-to-text model 350, which represent instances of the generative AI models 230 and the speech-to-text models 250, respectively, which were introduced above. FIG. 3 also includes a series of acts 300 performed by or for the voice-based generative system 206 to provide generative content to users based on a voice command detected in a voice capture session.

The series of acts 300 includes act 302 of the voice-based generative system 206 receiving a voice sample in a voice capture session. For example, the client device 260 captures a user's speech and provides it to the client device 260, either located on the client device and/or on a cloud computing system, for the voice-based generative system 206 to process.

In various instances, the voice-based generative system 206 receives a voice sample as an audio stream. In some instances, the voice sample is received as one or more files. For example, in some instances, the voice-based generative system 206 receives the speech audio as it is captured in real-time (e.g., each syllable, word, or every few words). In some implementations, the client device 260 provides the voice sample based on when a pause is detected in the speech. Indeed, the voice sample may be received as a single unit or as multiple portions making up the voice sample.

Act 304 includes the voice-based generative system 206 converting the voice sample to text using the speech-to-text model 350. For example, as the voice sample is received, the voice-based generative system 206 converts the voice sample to text using the speech-to-text model 350, which generates a text string. When converted on the fly, the speech-to-text model 350 may append words and characters to the text string as they are converted. The voice-based generative system 206 receives the text string for the first voice sample from the speech-to-text model 350, as shown in act 306.

In some implementations, a text string is a portion of a sentence. In one or more implementations, a text string is a complete sentence. In various implementations, the text string includes multiple sentences. In some cases, the text string includes one or more paragraphs. The text string may include any number of words.

Act 308 includes the voice-based generative system 206 determining that the voice sample is a voice command. In various implementations, the voice-based generative system 206 analyzes the text string to identify a voice command. For example, in some instances, the voice-based generative system 206 compares one or more words or phrases in the text string (e.g., the first two words) to known voice command action words (e.g., "Bing," "Copilot," "AI," "generative AI model," "LLM," and/or other example action words). When a match is found to an explicit, predetermined, or primer action word, the voice-based generative system 206 determines that the text string is a voice command.

In some implementations, the voice-based generative system 206 infers that the text string is a voice command based on the intonations and/or semantics of the text in the string. For example, the client device 260 determines, either directly or using a semantics model or a generative AI model, that the text string, or a portion of it, includes a voice command. For instance, the change in semantics between two sentences in the text string is distinctly different, and/or the text string pauses or stops after a later sentence as if waiting for the voice-based generative system 206 to perform an action. An example of the voice-based generative system 206 detecting that the intonation and semantics in a text string signal a voice command is provided below.

Based on determining that the text string is a voice command (e.g., includes a voice command), the voice-based generative system 206 determines the type of voice command included in the text string. For example, the voice-based generative system 206 generates a classification generative AI model prompt that includes the text string. Furthermore, the voice-based generative system 206 provides the classification generative AI model prompt to the generative AI model 330 to determine a voice command classification type. To illustrate, act 310 includes the voice-based generative system 206 providing a prompt to the generative AI model 330 for a voice command classification type of the voice sample.

In various implementations, the classification generative AI model prompt is a system prompt that includes a list of voice command types. For example, the classification generative AI model prompt instructs the generative AI model 330 to determine the voice command type (e.g., command classification types) from a list that includes a text tone change voice command, an auto-compose text voice command, a user query voice command, an image creation voice command, a meme generation voice command, and/or additional voice command classification types. The classification generative AI model prompt may include rules and logic to determine classification types as well as positive and/or negative examples of one or more voice command classification types.

The generative AI model 330 processes the text string following the classification generative AI model prompt and determines a classification type. To illustrate, act 312 includes the voice-based generative system 206 receiving a voice command classification type from the generative AI model 330. In some implementations, the generative AI model 330 determines that the text string does not include a voice command. In some cases, the generative AI model 330 indicates this to the voice-based generative system 206.

Act 314 includes the voice-based generative system 206 generating a generative AI model-based prompt based on the classification type and the text string. Based on the voice command type, the voice-based generative system 206 determines the type of generative content being requested by the user. Then, based on the particular voice command type, the voice-based generative system 206 generates a specific generative AI model prompt for either the generative AI model 330 (or another model like an image creation generative AI model) to obtain the requested generative content. The voice-based generative system 206 also provides the text string in the generative AI model prompt, which indicates the context and/or additional information needed for the generative AI model to accurately process the prompt.

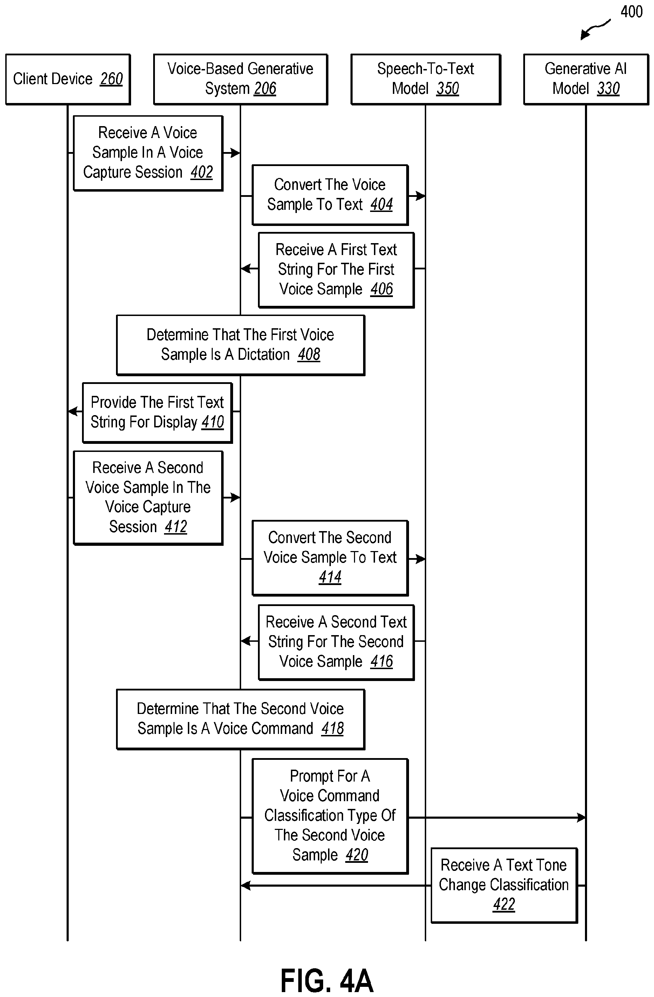

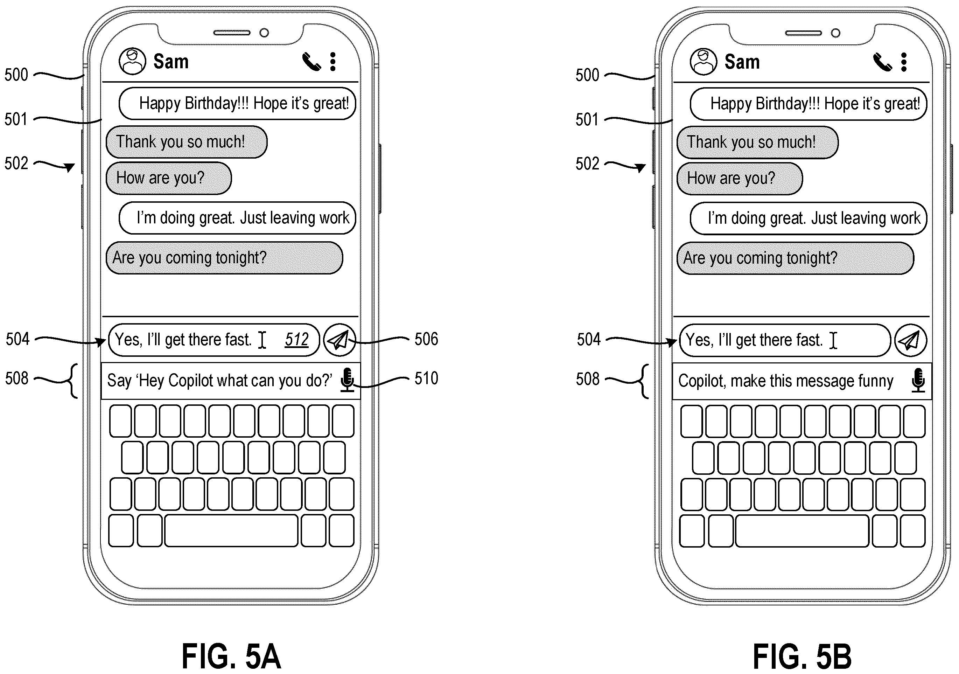

In one or more implementations, the generative AI model prompt is a text tone change voice command for modifying the tone of a given text string, as further described in connection with FIGS. 4A-4B and 5A-5F. In some implementations, the generative AI model prompt is a composition generative AI model prompt for creating a new text string, a query generative AI model prompt for answering a query, an image creation prompt for creating a generative image, or a meme creation generative AI model prompt for generating a meme.

Act 316 includes the voice-based generative system 206 sending the prompt to the generative AI model 330 and receiving the corresponding generative content depending on the voice command type. For example, the voice-based generative system 206 receives generative content from the generative AI model 330. As another example, if the voice command type was an image generation command, the voice-based generative system 206 may receive a generative image from an image creation generative AI model.

Act 318 includes the voice-based generative system 206 providing the generative content to the client device 260 for display. In various implementations, the client device 260 displays the requested generative content to the user while the user is still in the voice capture session or before starting a new voice capture session. Depending on the type of generative content, the client device 260 may determine how to display the generative content to the user, as further described below.

As mentioned earlier, FIGS. 4A-4B provide additional descriptions regarding the voice-based generative system 206 changing the tone of the text. In particular, FIGS. 4A-4B illustrate an example sequence diagram of using a generative AI model to change the written tone of captured speech input based on a text tone change voice command captured in the same voice capture session according to some implementations.

As shown, FIGS. 4A-4B include the components previously introduced, including the voice-based generative system 206, the client device 260, the generative AI model 330, and the speech-to-text model 350. FIGS. 4A-4B also include a series of acts 400 performed by or for the voice-based generative system 206 to modify text and/or content based on a text tone change voice command detected in a voice capture session.

To illustrate, in FIG. 4A, the series of acts 400 includes act 402 of the voice-based generative system 206 receiving a first voice sample in a voice capture session. As described above, the client device 260 captures a user's speech and provides it to the voice-based generative system 206, either located on the client device and/or on a cloud computing system, for processing.

Act 404 includes the voice-based generative system 206 converting the first voice sample to text using the speech-to-text model 350. As some or all of the text is converted, the speech-to-text model 350 provides it back to the voice-based generative system 206. To illustrate, act 406 includes the voice-based generative system 206 receiving the first text string from the first voice sample from the speech-to-text model 350.

Act 408 includes the voice-based generative system 206 determining that the first voice sample is a dictation. As described above, the voice-based generative system 206 directly or indirectly analyzes the first text string to determine that it is not a voice command. For example, the voice-based generative system 206 compares words and/or phrases in the first text string to match them to a voice command action word. In these cases, the voice-based generative system 206 does not identify a matching action word in the first text string and thus determines that the first voice sample is not a voice command (e.g., does not include a voice command).

Furthermore, upon determining that the first voice sample is not a voice command, the voice-based generative system 206 determines that it is a speech-to-text dictation. Accordingly, the voice-based generative system 206 provides the converted text in the first text string to the client device 260, which displays it to the user, shown as act 410.

Act 412 includes the voice-based generative system 206 receiving a second voice sample in the voice capture session. While in the same voice capture session, the client device 260 captures another voice sample. For example, as the user continues to speak within the same voice capture session, a microphone on the client device 260 captures the user's speech and provides it to the voice-based generative system 206.

Act 414 includes the voice-based generative system 206 converting the second voice sample to text. As before, the voice-based generative system 206 uses the speech-to-text model 350 to convert the second voice sample into text to be analyzed as having either a speech-to-text dictation or a voice command. To illustrate, act 416 includes the voice-based generative system 206 receiving a second text string for the second voice sample from the speech-to-text model 350.

Act 418 includes determining that the second voice sample is a voice command (e.g., includes a voice command). For example, the voice-based generative system 206 analyzes the second text string to identify words matching a voice command (or that the semantics of the second text string infer a voice command). For instance, the voice-based generative system 206 compares one or more words or phrases in the second text string to identify a voice command action word or phrase.

In one or more implementations, the voice-based generative system 206 determines that the second voice sample is a voice command from the second voice sample. For example, rather than (or in addition to) converting the second voice sample to text (e.g., act 414 and act 416), the voice-based generative system 206 analyzes the second voice sample to identify voice characteristics indicating the second voice sample as a voice command.

In some implementations, the voice-based generative system 206 utilizes a voice characteristics model to directly analyze the second voice sample to identify user voice characteristics. Based on comparing the voice characteristics to known voice characteristics associated with voice commands, the voice-based generative system 206 determines that the second voice sample includes a voice command. For example, the voice-based generative system 206 determines a commanding tone of voice based on the voice characteristics, which indicates that the second voice sample is a voice command.

In some implementations, the voice-based generative system 206 compares voice characteristics changes between the first voice sample and the second voice sample and, based on the changes between the two characteristics, determines that the second voice sample is a voice command. For example, the change in voice characteristics may indicate a switch from dictation to command (e.g., form dictation to a voice command).

As previously described, the voice-based generative system 206 uses the generative AI model 330 to classify the voice command type. To illustrate, in FIG. 4A, act 420 includes the voice-based generative system 206 prompting the generative AI model 330 for a voice command classification type of the second voice sample, and act 422 includes the voice-based generative system 206 receiving a text tone change classification. For example, based on processing the generative AI model classification prompt, the generative AI model 330 determines the second voice sample to include a text tone change voice command and returns a corresponding classification.

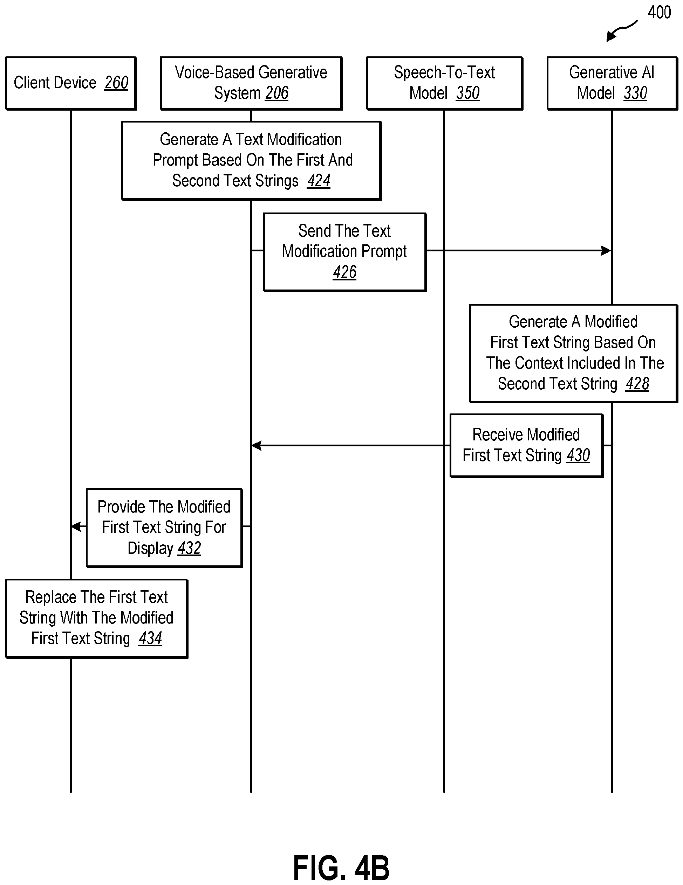

Based on receiving the text tone change classification, the voice-based generative system 206 identifies that the user would like to change the text of the first text string according to the context provided in the voice command. Accordingly, in FIG. 4B, act 424 includes the voice-based generative system 206 generating a text modification prompt based on the first text string and the second text string. For example, the text modification prompt instructs the generative AI model 330 to modify the tone of the first text string to align with or match the tone indicated in the second text string.

In some implementations, the voice command is to change another aspect of the first text string. Accordingly, the voice-based generative system 206 may provide a text modification prompt that includes such instructions. For example, the prompt instructs the generative AI model 330 to modify the first text string, captured in the same voice capture session, according to the information, context, or instructions included in the second voice sample (e.g., the second text string). For example, the second voice sample requests rewriting the first text string into a song, adding rhymes, condensing or expanding it, or otherwise modifying it, which the voice-based generative system 206 may include in the prompt to the generative AI model 330.

Act 426 includes the voice-based generative system 206 sending the text modification prompt to the generative AI model 330. In response, the generative AI model 330 processes the prompt to modify the first text string as instructed. To illustrate, act 428 includes the generative AI model 330 generating a modified text string based on the context included in the second text string. Act 430 includes the voice-based generative system 206 receiving the modified first text string from the generative AI model 330.

Act 432 includes the voice-based generative system 206 providing the modified first text string to the client device 260 for display. For example, while in the voice capture session or before starting a new voice capture session, the client device 260 displays the modified first text string to the user as requested in the voice command.

In some implementations, the client device 260 replaces the first text string with the modified text string, as shown in act 434. In one or more implementations, the client device 260 automatically replaces the first text string upon receiving the modified first text string from the voice-based generative system 206 without requiring the user to press an activation element. In some instances, the client device 260 automatically replaces the first text string and sends the modified first text string as a message, as further described below.

FIGS. 5A-5F provide an example of the voice-based generative system 206 changing the tone of text based on a text tone change voice command. In particular, FIGS. 5A-5F illustrate an example graphical user interface flow of changing the written tone of captured speech input based on a text tone change voice command captured in the same voice capture session according to some implementations.

As shown, FIGS. 5A-5F include a series of messaging thread user interfaces on a client device 500 (e.g., a mobile device) where a user provides a voice command to change the tone of text dictated in a single voice capture session and the voice-based generative system 206 provides the modified text for the user to send as a message.

To illustrate, FIG. 5A shows a client device 500 that includes a messaging thread user interface 501 with a messages area 502 and a message composition field 504 associated with a send button 506 that sends text strings within the message composition field 504 as messages.

As shown, the client device 500 uses a content input system, which provides a keyboard, to input text in the message composition field 504 for sending messages within the messaging thread. In addition, the content input system enables sending other content within the messaging thread. For instance, the message composition field 504 also provides the voice-based generative system 206 to enable a user to enhance the messaging thread with generative content requested during a voice capture session. For example, the voice-based generative system 206 provides a generative content user interface 508 for capturing both speech-to-text dictations and generative content voice commands.

In various implementations, the generative content user interface 508 is associated with providing indications corresponding to the voice-based generative system 206. For example, the generative content user interface 508 includes instructions and tips for requesting generative content, as well as the status of the voice-based generative system 206 (e.g., loading, processing, retrieving). In some instances, the generative content user interface 508 also includes generative content for a user to select and include in the messaging thread, as shown in the figures.

As shown in FIG. 5A, a user selects the voice capture element 510 (e.g., the microphone button) and starts providing speech in a voice capture session. For example, the user says, "Yes, I'll get there fast" in response to previous text messages. The voice-based generative system 206 captures the speech in a first voice sample, determines it to be speech-to-text dictation, and displays the converted text of the first voice sample as a first text string 512 in the generative content user interface 508. In some implementations, the user selects the send button 506 to send the speech-to-text dictation as a message.

However, as shown in FIG. 5B, rather than selecting the send button 506 and with the voice capture session still active (e.g., capturing audio), the user provides additional speech captured as a second voice sample. For example, the user says, "Hey Copilot, make this message funny" while in the same voice capture session. The voice-based generative system 206 determines the second voice sample to be a voice command, and more particularly, a text tone change voice command, as described above.

In addition, the voice-based generative system 206 provides the second text string generated from the second voice sample to the client device 500 to be displayed in the generative content user interface 508, as shown. This indicates to the user that the second voice sample includes a voice command for generative content.

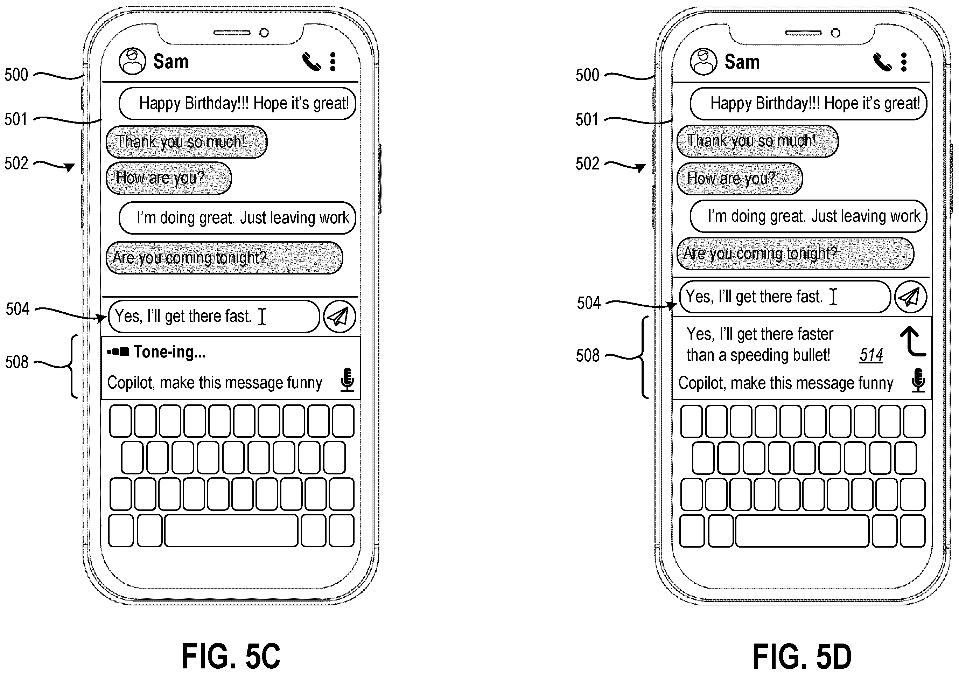

In FIG. 5C, the voice-based generative system 206 updates the generative content user interface 508 (e.g., a status update) to show that it is processing the voice command. More particularly, the generative content user interface 508 shows that the voice-based generative system 206 recognized the voice command as a text tone change voice command and modified the tone of the text strings based on the instructions included in the second voice sample (e.g., the voice-based generative system 206 is using the generative AI model 330 as described above to generate a modified text string).

FIG. 5D shows the voice-based generative system 206 updating the generative content user interface 508 to display the modified first text string 514 concurrently with the first text string 512. For example, when the voice-based generative system 206 uses the generative AI model 330 to change the tone as requested while also sounding natural, the voice-based generative system 206 provides the modified first text string 514 to the client device 500 to be displayed within the generative content user interface 508.

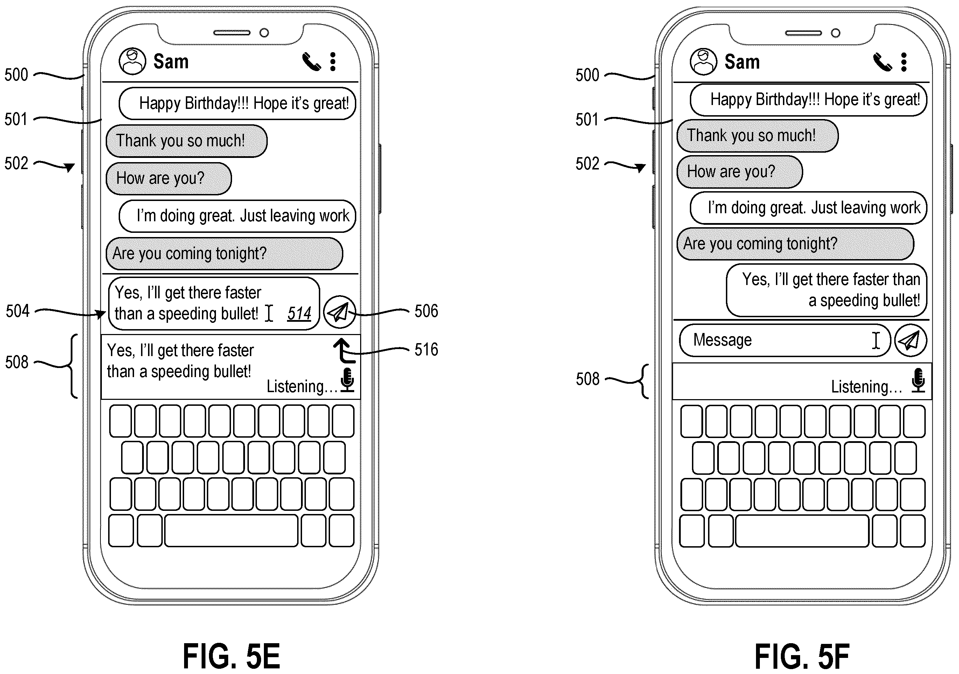

FIG. 5E shows the client device 500 detecting a selection of an activation element 516 within the generative content user interface 508. Upon selecting the activation element 516, the client device 500 replaces the first text string 512 in the message composition field 504 with the modified first text string 514. The user can then select the send button 506 to send the modified first text string 514 as a message in the messaging thread, as shown in FIG. 5F.

In some implementations, the voice-based generative system 206 provides multiple modified text strings for display and allows the user to select one, request additional examples, or cancel their voice command. In various implementations, the voice-based generative system 206 automatically replaces the first text string with the modified first text string within the message composition field. In one or more implementations, the voice-based generative system 206 removes the original text string from the message composition field and automatically sends the modified first text string as a message.

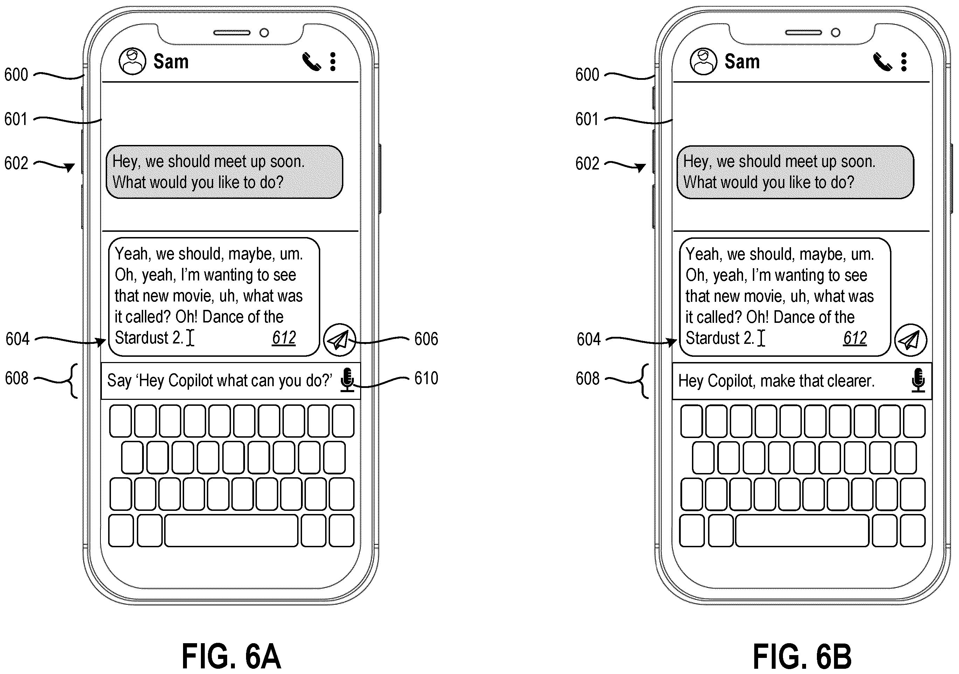

FIGS. 6A-6D illustrate an example of graphical user interfaces on a mobile device that change the written tone of captured speech input based on the speech captured in the same voice capture session. Similar to FIGS. 5A-5F, FIGS. 6A-6D include a series of messaging thread user interfaces on a client device 600 (e.g., a mobile device) where a user provides a voice command to change the tone of text dictated in a single voice capture session and the voice-based generative system 206 provides the modified text for the user to send as a message.

To illustrate, FIG. 6A shows a client device 600 that includes a messaging thread user interface 601 with a messages area 602 and a message composition field 604 associated with a send button 606 that sends text strings within the message composition field 604 as messages. As shown, the messages area 602 includes a message, and the message composition field 604 includes a draft message ready to send (e.g., obtained from a first voice sample in a voice capture element 610, such as the microphone button).

FIG. 6A also shows a generative content user interface 608 associated with providing indications corresponding to the voice-based generative system 206. For example, based on following the invitation in the generative content user interface 608, the user provides a voice command in the same voice capture session to modify the first text string.

FIG. 6B shows the voice-based generative system 206 receiving a second voice sample within the voice capture session and determining that the second voice sample is a voice command, as described above. In particular, the voice-based generative system 206 determines that the voice command corresponds to improving the draft message 612 in the message composition field 604 before the user sends it (e.g., using generative AI model tools to change the first text string to be more streamlined and condensed).

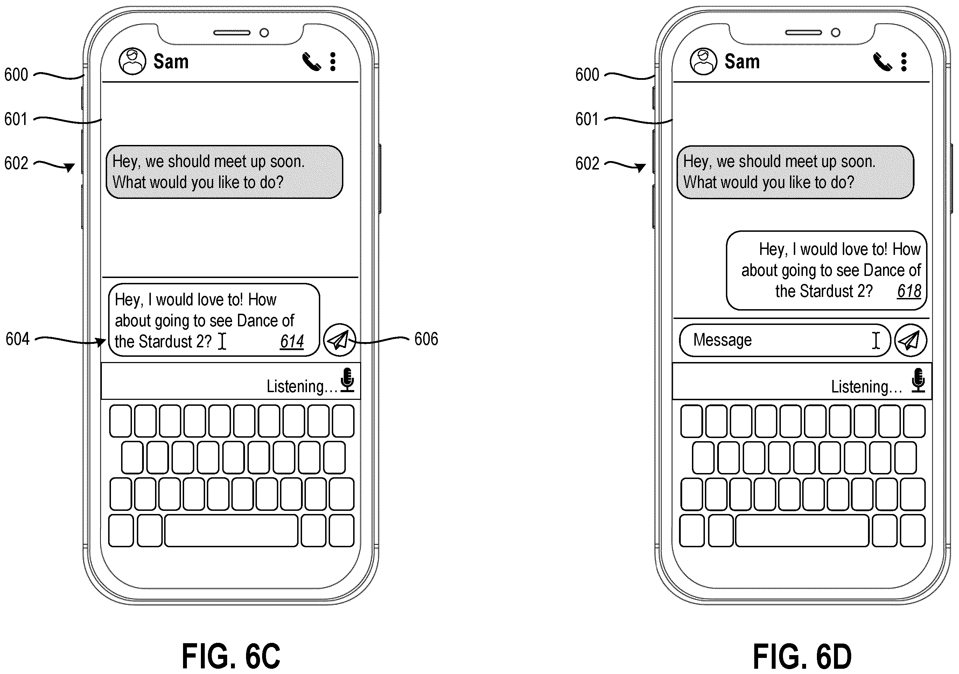

FIG. 6C shows the voice-based generative system 206 updating the draft message in the message composition field 604 to include the modified draft message 614 generated by the generative AI model. For example, upon the voice-based generative system 206 using the generative AI model to change the tone as requested while also sounding natural, the voice-based generative system 206 provides the modified draft message 614 to the client device 600 to be displayed within the message composition field 604. In these instances, the voice-based generative system 206 automatically replaces the draft message 612 with the modified draft message 614.

With the message composition field 604 displaying the modified draft message 614, the user may select the send button 606 to send the modified draft message 614 as a message in the message thread. To illustrate, FIG. 6D shows the modified draft message 614 as a response message 618 in the message thread based on the modified draft message 614 provided by the voice-based generative system 206.

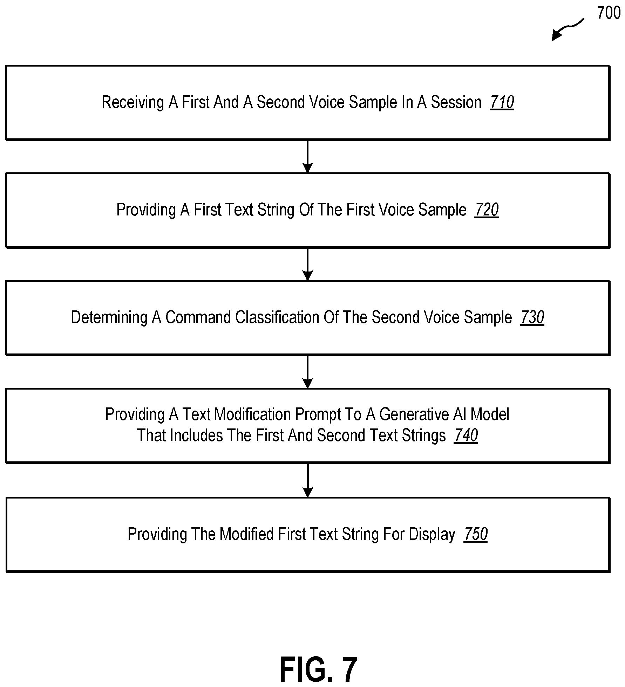

Turning now to FIGS. 7-8, each of these figures illustrates an example series of acts of a computer-implemented method for providing generative content for one or more voice samples in a voice capture session according to some implementations. While these figures illustrate acts according to one or more implementations, alternative implementations may omit, add to, reorder, and/or modify any of the acts shown.

The acts in FIGS. 7-8 can be performed as part of a method (e.g., a computer-implemented method). Alternatively, a computer-readable medium can include instructions that, when executed by a processing system with a processor, cause a computing device to perform the acts in FIGS. 7-8. In some implementations, a system (e.g., a processing system comprising a processor) can perform the acts in FIGS. 7-8. For example, the system includes a processing system and a computer memory including instructions that, when executed by the processing system, cause the system to perform various actions or steps.

As shown, FIG. 7 includes a series of acts 700. For example, the series of acts 700 includes act 710 of receiving a first and a second voice sample in a session. For instance, in example implementations, act 710 involves receiving a first voice sample and a second voice sample in a voice capture session.

As further shown, the series of acts 700 includes act 720 of providing a first text string of the first voice sample. For instance, in example implementations, act 720 involves providing a first text string for the display of the first voice sample based on determining that the first voice sample is a speech-to-text dictation.

As further shown, the series of acts 700 includes act 730 of determining a command classification of the second voice sample. For instance, in example implementations, act 730 involves determining the command classification of the second voice sample based on determining that the second voice sample is a voice command.

As further shown, the series of acts 700 includes act 740 of providing a text modification prompt to a generative AI model that includes the first and second text strings. For instance, in example implementations, act 740 involves providing a text modification prompt to a generative AI model based on the command classification that includes the first text string and the second text string based on the second voice sample.

As further shown, the series of acts 700 includes act 750 of providing the modified first text string for display. For instance, in example implementations, act 750 involves providing the modified first text string for display based on receiving a modified first text string from the generative AI model in response to the text modification prompt.

In some implementations, the voice capture session is a single session that captures multiple dictation sentences from a user associated with a client device. In some implementations, the voice capture session includes multiple continuous microphone activation sessions corresponding to the first text string. In some implementations, a first user provides the first voice sample and the second voice sample, and/or the voice capture session is associated with a messaging thread on a mobile device between the first user and at least one additional user. In some implementations, the first voice sample and the second voice sample are associated with adding text and content to a digital document. In some implementations, the first voice sample and the second voice sample are associated with adding text and content to a word-processing document.

In some implementations, the series of acts 700 includes determining that the first voice sample is a speech-to-text dictation based on using a speech-to-text conversion model to generate the first text string. In some implementations, the series of acts 700 includes determining that the first voice sample is a speech-to-text dictation based on not identifying a predetermined action word in the first text string. In some implementations, the series of acts 700 includes determining that the first voice sample is a speech-to-text dictation based on: analyzing the first text string with a classification model to identify an intent of the first text string; and determining that the intent of the first text string is a speech-to-text dictation.

In some implementations, the series of acts 700 includes providing the first text string of the first voice sample for display within a message composition field of a messaging thread user interface associated with a messaging thread between multiple users. In some implementations, the series of acts 700 includes not receiving user input to send the first text string to a recipient user associated with the messaging thread before receiving the second voice sample within the voice capture session. In some implementations, the series of acts 700 includes: based on determining that the first voice sample is a speech-to-text dictation, causing display of the first text string in a first user interface field; and based on determining that the second voice sample is a voice command, causing display of at least a portion of the second text string in a second user interface field concurrent with causing display of the first text string.

In some implementations, the series of acts 700 includes determining that the second voice sample is a voice command based on: generating the second text string using a speech-to-text conversion model; and identifying a predetermined action word in the second text string indicating the second voice sample as a voice command. In some implementations, the series of acts 700 includes determining that the second voice sample is a voice command based on: generating the second text string using a speech-to-text conversion model; analyzing the second text string with a classification model to identify an intent of the second text string; and determining that the intent of the second text string is a voice command. In some implementations, determining the command classification of the second voice sample includes: converting the second voice sample to the second text string; providing the second text string to the generative AI model within a classification generative AI model prompt; and receiving a command classification type from the generative AI model.

In one or more implementations, determining the command classification of the second voice sample includes analyzing the second voice sample to identify voice characteristics indicating the second voice sample as a voice command. In various implementations, determining the command classification of the second voice sample includes analyzing the first voice sample and the second voice sample to identify a change in voice characteristics indicating the second voice sample as a voice command.

In some implementations, the command classification types included in the classification generative AI model prompt include a text tone change classification, an auto-compose text classification, a user query classification, an image creation classification, and a meme generation classification. In some implementations, the series of acts 700 includes generating, based on identifying the voice command of the second voice sample as a text tone change classification, the text modification prompt that includes instructing the generative AI model to change the tone of the first text string based on the context included in the second text string. In some implementations, providing the modified first text string for display includes providing the modified first text string in a separate user interface text field that is apart or distinct from a user interface text field displaying the first text string.

In some implementations, the separate user interface text field is associated with an element that, when selected, causes the first text string to be replaced with the modified first text string. In some implementations, providing the modified first text string for display includes replacing the first text string with the modified first text string within a messaging user interface or document user interface. In some implementations, providing the modified first text string for display includes automatically sending the modified first text string within a messaging thread and removing the first text string from being displayed within a user interface.

In some implementations, the series of acts 700 includes receiving a third voice sample in an additional voice capture session and/or, based on determining that the third voice sample is a voice command, determining that the third voice sample is classified as an auto-compose text classification.

In some implementations, the series of acts 700 includes, based on the third voice sample being an auto-compose text classification, generating a composition generative AI model prompt to provide to the generative AI model with instructions to generate a generated text string based on the context included in the third voice sample and/or, based on receiving the generated text string from the generative AI model, providing the generated text string for display.

In some implementations, the third voice sample is associated with a messaging thread among or between multiple users and/or providing the generated text string for display includes providing the generated text string within a message composition field of the messaging thread. In some implementations, the series of acts 700 includes receiving a third voice sample in an additional voice capture session, and based on determining that the third voice sample is a voice command, determining that the third voice sample is classified as a user query classification.

In some implementations, the series of acts 700 includes, based on the third voice sample being a user query classification, generating a query generative AI model prompt to provide to the generative AI model with instructions to generate a query response string based on the query in the third voice sample; and based on receiving the query response string from the generative AI model, providing the query response string for display. In some implementations, the third voice sample is associated with a messaging thread between or among multiple users, and/or providing the query response string for display includes providing the query response string within a user interface field that is separate from a message composition field of the messaging thread.

In some implementations, the series of acts 700 includes receiving a third voice sample in an additional voice capture session; and based on determining that the third voice sample is a voice command, determining that the third voice sample is classified as an image creation classification.

In some implementations, the series of acts 700 includes generating an image creation prompt to provide to an image creation generative AI model with instructions to generate a digital image based on the context included in the third voice sample based on the third voice sample, being classified as an image creation classification, and/or providing the digital image for display based on receiving the digital image from the image creation generative AI model. In some implementations, the third voice sample is associated with a messaging thread between or among multiple users and/or providing the digital image for display includes providing the digital image within a user interface field that is separate from a message composition field of the messaging thread.

In some implementations, the series of acts 700 includes receiving a third voice sample in an additional voice capture session and/or based on determining that the third voice sample is a voice command, determining that the third voice sample is classified as a meme generation classification. In some implementations, the series of acts 700 includes, based on the third voice sample being a meme generation classification, generating a meme creation generative AI model prompt to provide to the generative AI model with instructions to generate a digital image with overlaid text based on the context included in the third voice sample and/or based on receiving the digital image with overlaid text from the generative AI model, providing the digital image with overlaid text for display. In some implementations, the third voice sample is associated with a messaging thread between multiple users and/or providing the digital image with overlaid text for display includes providing the digital image with overlaid text within a user interface field that is separate from a message composition field of the messaging thread.

In some implementations, the series of acts 700 includes receiving a first and a second voice sample in a session, such as receiving a first voice sample and a second voice sample in a voice capture session. In some implementations, the series of acts 700 includes providing a first text string of the first voice sample, such as providing a first text string for the display of the first voice sample based on determining that the first voice sample is a speech-to-text dictation.

In some implementations, the series of acts 700 includes determining a voice command classification of the second voice sample, such as determining a command classification of the second voice sample based on determining that the second voice sample is a voice command. In some implementations, the series of acts 700 includes providing a generative content prompt to a generative AI model based on the voice command classification type, such as providing a generative content prompt to a generative AI model based on the command classification type and a second text string based on the second voice sample. In some implementations, the series of acts 700 includes providing some or all of the first text string and/or a second text string based on the second voice sample within the generative content prompt.

In some implementations, the series of acts 700 includes providing generative content received from the generative AI model for display, such as providing the generative content for display based on receiving generative content from the generative AI model in response to the generative content prompt. In some implementations, the series of acts 700 includes modifying the first text string with generative text or a generative digital image.

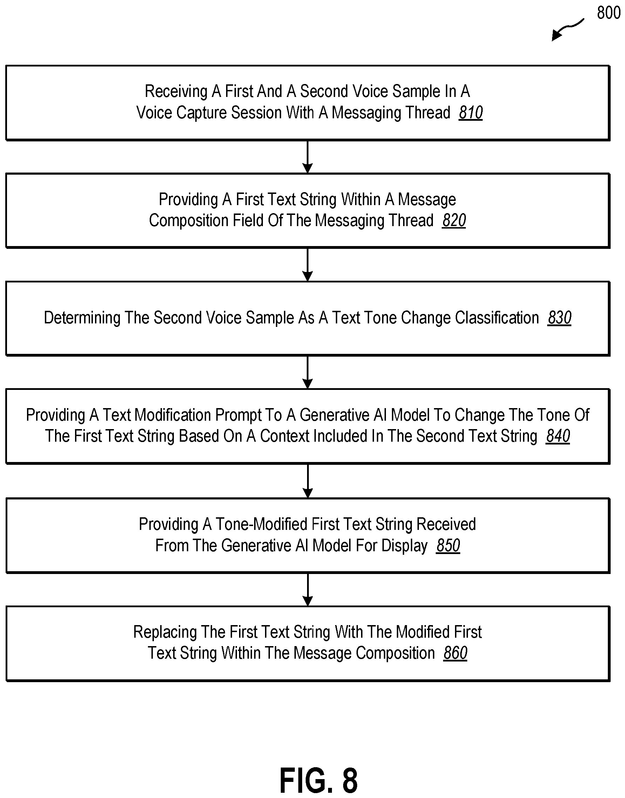

As shown, FIG. 8 includes a series of acts 800. For example, the series of acts 800 includes act 810 of receiving a first and a second voice sample in a voice capture session associated with a messaging thread. For instance, in example implementations, act 810 involves receiving, from a first user, a first voice sample and a second voice sample in a voice capture session associated with a messaging thread on a mobile device between the first user and at least one additional user.

As further shown, the series of acts 800 includes act 820 of providing a first text string within a message composition field of the messaging thread. For instance, in example implementations, act 820 involves providing a first text string of the first voice sample for display within a message composition field of the messaging thread based on determining that the first voice sample is a speech-to-text dictation.

As further shown, the series of acts 800 includes act 830 of determining the second voice sample as a text tone change classification. For instance, in example implementations, act 830 involves determining a command classification type for the second voice sample as a text tone change classification based on determining that the second voice sample is a voice command.

As further shown, the series of acts 800 includes act 840 of providing a text modification prompt to a generative AI model to change the tone of the first text string based on a context included in the second text string. For instance, in example implementations, act 840 involves providing a text modification prompt to a generative AI model based on the text tone change classification that includes the first text string and a second text string based on the second voice sample. In some instances, the text modification prompt instructs the generative AI model to change the tone of the first text string based on a context included in the second text string.

As further shown, the series of acts 800 includes act 850 of providing a tone-modified first text string received from the generative AI model for display. For instance, in example implementations, act 850 involves providing the modified first text string with the tone of the first text string changed for display based on receiving a modified first text string from the generative AI model in response to the text modification prompt.

As further shown, the series of acts 800 includes act 860 of replacing the first text string with the modified first text string within the message composition field. For instance, in example implementations, act 860 involves replacing the first text string with the modified first text string within the message composition field of the messaging thread.

FIG. 9 illustrates certain components that may be included within a computer system 900. The computer system 900 may be used to implement the various computing devices, components, and systems described herein (e.g., by performing computer-implemented instructions). As used herein, a "computing device" refers to electronic components that perform a set of operations based on a set of programmed instructions. Computing devices include groups of electronic components, client devices, server devices, etc.

In various implementations, the computer system 900 represents one or more of the client devices, server devices, or other computing devices described above. For example, the computer system 900 may refer to various types of network devices capable of accessing data on a network, a cloud computing system, or another system. For instance, a client device may refer to a mobile device such as a mobile telephone, a smartphone, a personal digital assistant (PDA), a tablet, a laptop, or a wearable computing device (e.g., a headset or smartwatch). A client device may also refer to a non-mobile device such as a desktop computer, a server node (e.g., from another cloud computing system), or another non-portable device.

The computer system 900 includes a processing system including a processor 901. The processor 901 may be a general-purpose single- or multi-chip microprocessor (e.g., an Advanced Reduced Instruction Set Computer (RISC) Machine (ARM)), a special-purpose microprocessor (e.g., a digital signal processor (DSP)), a microcontroller, a programmable gate array, etc. The processor 901 may be referred to as a central processing unit (CPU) and may cause computer-implemented instructions to be performed. Although the processor 901 shown is just a single processor in the computer system 900 of FIG. 9, in an alternative configuration, a combination of processors (e.g., an ARM and DSP) could be used.

The computer system 900 also includes memory 903 in electronic communication with the processor 901. The memory 903 may be any electronic component capable of storing electronic information. For example, the memory 903 may be embodied as random-access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM), registers, and so forth, including combinations thereof.

Instructions 905 and data 907 may be stored in the memory 903. The instructions 905 may be executable by the processor 901 to implement some or all of the functionality disclosed herein. Executing the instructions 905 may involve the use of the data 907 that is stored in the memory 903. Any of the various examples of modules and components described herein may be implemented, partially or wholly, as instructions 905 stored in memory 903 and executed by the processor 901. Any of the various examples of data described herein may be among the data 907 that is stored in memory 903 and used during the execution of the instructions 905 by the processor 901.

A computer system 900 may also include one or more communication interface(s) 909 for communicating with other electronic devices. The one or more communication interface(s) 909 may be based on wired communication technology, wireless communication technology, or both. Some examples of the one or more communication interface(s) 909 include a Universal Serial Bus (USB), an Ethernet adapter, a wireless adapter that operates according to an Institute of Electrical and Electronics Engineers (IEEE) 902.11 wireless communication protocol, a Bluetooth^{®} wireless communication adapter, and an infrared (IR) communication port.

A computer system 900 may also include one or more input device(s) 911 and one or more output device(s) 913. Some examples of the one or more input device(s) 911 include a keyboard, mouse, microphone, remote control device, button, joystick, trackball, touchpad, and light pen. Some examples of the one or more output device(s) 913 include a speaker and a printer. A specific type of output device that is typically included in a computer system 900 is a display device 915. The display device 915 used with implementations disclosed herein may utilize any suitable image projection technology, such as liquid crystal display (LCD), light-emitting diode (LED), gas plasma, electroluminescence, or the like. A display controller 917 may also be provided, for converting data 907 stored in the memory 903 into text, graphics, and/or moving images (as appropriate) shown on the display device 915.

The various components of the computer system 900 may be coupled together by one or more buses, which may include a power bus, a control signal bus, a status signal bus, a data bus, etc. For clarity, the various buses are illustrated in FIG. 9 as a bus system 919.

This disclosure describes a subjective data application system in the framework of a network. In this disclosure, a "network" refers to one or more data links that enable electronic data transport between computer systems, modules, and other electronic devices. A network may include public networks such as the Internet as well as private networks. When information is transferred or provided over a network or another communication connection (either hardwired, wireless, or both), the computer correctly views the connection as a transmission medium. Transmission media can include a network and/or data links that carry required program code in the form of computer-executable instructions or data structures, which can be accessed by a general-purpose or special-purpose computer. Combinations of the above are also included within the scope of computer-readable media.

In addition, the network described herein may represent a network or a combination of networks (such as the Internet, a corporate intranet, a virtual private network (VPN), a local area network (LAN), a wireless local area network (WLAN), a cellular network, a wide area network (WAN), a metropolitan area network (MAN), or a combination of two or more such networks) over which one or more computing devices may access the various systems described in this disclosure. Indeed, the networks described herein may include one or multiple networks that use one or more communication platforms or technologies for transmitting data. For example, a network may include the Internet or other data link that enables transporting electronic data between respective client devices and components (e.g., server devices and/or virtual machines thereon) of the cloud computing system.

Further, upon reaching various computer system components, program code means in the form of computer-executable instructions or data structures can be transferred automatically from transmission media to non-transitory computer-readable storage media (devices), or vice versa. For example, computer-executable instructions or data structures received over a network or data link can be buffered in random-access memory (RAM) within a network interface module (NIC), and then it is eventually transferred to computer system RAM and/or to less volatile computer storage media (devices) at a computer system. Thus, it should be understood that computer-readable storage media (devices) can be included in computer system components that also (or even primarily) utilize transmission media.

Computer-executable instructions include instructions and data that, when executed by a processor, cause a general-purpose computer, special-purpose computer, or special-purpose processing device to perform a certain function or group of functions. In some implementations, computer-executable and/or computer-implemented instructions are executed by a general-purpose computer to turn the general-purpose computer into a special-purpose computer implementing elements of the disclosure. The computer-executable instructions may include, for example, binaries, intermediate format instructions such as assembly language, or even source code. Although the subject matter has been described in language specific to structural features and/or methodological acts, it is to be understood that the subject matter defined in the appended claims is not necessarily limited to the features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multiprocessor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or a combination of hardwired and wireless data links) through a network, both perform tasks. In a distributed system environment, program modules may be located in both local and remote memory storage devices.

The techniques described herein may be implemented in hardware, software, firmware, or any combination thereof unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium, including instructions that, when executed by at least one processor, perform one or more of the methods described herein (including computer-implemented methods). The instructions may be organized into routines, programs, objects, components, data structures, etc., which may perform particular tasks and/or implement particular data types, and which may be combined or distributed as desired in various implementations.

Computer-readable media can be any available media that can be accessed by a general-purpose or special-purpose computer system. Computer-readable media that store computer-executable instructions are non-transitory computer-readable storage media (devices). Computer-readable media that carry computer-executable instructions are transmission media. Thus, by way of example, implementations of the disclosure can include at least two distinctly different kinds of computer-readable media: non-transitory computer-readable storage media (devices) and transmission media.

As used herein, computer-readable storage media (devices) may include RAM, ROM, EEPROM, CD-ROM, solid-state drives (SSDs) (e.g., based on RAM), Flash memory, phase-change memory (PCM), other types of memory, other optical disk storage, magnetic disk storage or other magnetic storage devices, or any other medium which can be used to store desired program code means in the form of computer-executable instructions or data structures and which can be accessed by a general-purpose or special-purpose computer.

The steps and/or actions of the methods described herein may be interchanged with one another without departing from the scope of the claims. In other words, unless a specific order of steps or actions is required for the proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a data repository, or another data structure), ascertaining, and the like. Also, "determining" can include receiving (e.g., receiving information), accessing (e.g., accessing data in a memory), and the like. Also, "determining" can include resolving, selecting, choosing, establishing, and the like.

The terms "comprising," "including," and "having" are intended to be inclusive and mean that there may be additional elements other than the listed elements. Additionally, it should be understood that references to "one implementation" or "implementations" of the present disclosure are not intended to be interpreted as excluding the existence of additional implementations that also incorporate the recited features. For example, any element or feature described concerning an implementation herein may be combinable with any element or feature of any other implementation described herein, where compatible.

The present disclosure may be embodied in other specific forms without departing from its spirit or characteristics. The described implementations are to be considered illustrative and not restrictive. The scope of the disclosure is indicated by the appended claims rather than by the foregoing description. Changes that come within the meaning and range of equivalency of the claims are to be embraced within their scope.

## Claims

1. A computer-implemented method for providing generative content (228) for one or more voice samples (224), comprising:
receiving (710) a first voice sample and a second voice sample in a voice capture session;
based on determining that the first voice sample is a speech-to-text dictation, providing (720) a first text string for display of the first voice sample;
based on determining that the second voice sample is a voice command, determining (730) a command classification of the second voice sample;
providing (740) a text modification prompt to a generative AI model based on the command classification that includes the first text string and a second text string based on the second voice sample; and
providing (750) a modified first text string for display based on receiving the modified first text string from the generative AI model in response to the text modification prompt.

2. The computer-implemented method of claim 1, wherein the voice capture session is provided according to one of the following:
(i) the voice capture session is a single session that captures multiple dictation sentences from a user associated with a client device;
(ii) the voice capture session includes multiple continuous microphone activation sessions corresponding to the first text string.

3. The computer-implemented method of claim 1, wherein:
(i) a first user provides the first voice sample and the second voice sample; and
the voice capture session is associated with a messaging thread on a mobile device between the first user and at least one additional user; or
(ii) the first voice sample and the second voice sample are associated with adding text and content to a digital document.

4. The computer-implemented method of claim 1, further comprising determining that the 5 first voice sample is a speech-to-text dictation based on one of the following:
(i) not identifying a predetermined action word in the first text string;
(ii) analyzing the first text string with a classification model to identify an intent of the first text string; and
determining that the intent of the first text string is a speech-to-text dictation.

5. The computer-implemented method of claim 1, further comprising providing the first text string of the first voice sample for display within a message composition field of a messaging thread user interface associated with a messaging thread between multiple users.

6. The computer-implemented method of claim 5, further comprising not receiving user input to send the first text string to a recipient user associated with the messaging thread before receiving the second voice sample within the voice capture session.

7. The computer-implemented method of claim 1, further comprising:
based on determining that the first voice sample is a speech-to-text dictation, causing display of the first text string in a first user interface field; and
based on determining that the second voice sample is a voice command, causing display of at least a portion of the second text string in a second user interface field concurrent with displaying the first text string.

8. The computer-implemented method of claim 1, further comprising determining that the second voice sample is a voice command based on one of the following:
(i) analyzing the second voice sample to identify voice characteristics indicating the second voice sample as a voice command;
(ii) generating the second text string using a speech-to-text conversion model;
analyzing the second text string with a classification model to identify an intent of the second text string; and
determining that the intent of the second text string is a voice command.

9. The computer-implemented method of claim 1, further comprising generating, based on identifying the voice command of the second voice sample as a text tone change classification, the text modification prompt that includes instructing the generative AI model to change a tone of the first text string based on a context included in the second text string.

10. A system comprising:
a processor (901); and
a non-transitory computer memory (903) comprising instructions (905) that, when executed by the processor (901), cause the system to perform operations of:
receiving (710) a first voice sample and a second voice sample in a voice capture session;
based on determining that the first voice sample is a speech-to-text dictation, providing (720) a first text string for display of the first voice sample;
based on determining that the second voice sample is a voice command, determining (730) a command classification of the second voice sample;
providing (740) a text modification prompt to a generative AI model based on the command classification that includes the first text string and a second text string based on the second voice sample; and
providing (750) a modified first text string for display based on receiving the modified first text string from the generative AI model in response to the text modification prompt.

11. The system of claim 10, wherein the first voice sample and the second voice sample are associated with adding text and content to a word-processing document.

12. The system of claim 10, wherein
(i) the non-transitory computer memory further comprises instructions that, when executed by the processor, cause the system to perform operations of:
generating the second text string using a speech-to-text conversion model; and
identifying a predetermined action word in the second text string indicating the second voice sample as a voice command; or
(ii) providing the modified first text string for display includes providing the modified first text string in a separate user interface text field that is apart from a user interface text field displaying the first text string.

13. The system of claim 10, wherein determining the command classification of the second voice sample includes:
converting the second voice sample to the second text string;
providing the second text string to the generative AI model within a classification generative AI model prompt; and
receiving a command classification type from the generative AI model.

14. The system of claim 13, wherein command classification types included in the classification generative AI model prompt include a text tone change classification, an auto-compose text classification, a user query classification, an image creation classification, and a meme generation classification.

15. A computer-implemented method for providing generative content (228) for one or more voice samples (224), comprising:
receiving (810), from a first user, a first voice sample and a second voice sample in a voice capture session associated with a messaging thread on a device between the first user and at least one additional user;
based on determining that the first voice sample is a speech-to-text dictation, providing (820) a first text string of the first voice sample for display within a message composition field of the messaging thread;
based on determining that the second voice sample is a voice command, determining (830) a command classification type for the second voice sample as a text tone change classification;
providing (840) a text modification prompt to a generative AI model based on the text tone change classification that includes the first text string and a second text string based on the second voice sample, wherein the text modification prompt instructs the generative AI model to change a tone of the first text string based on a context included in the second text string;
based on receiving a modified first text string from the generative AI model in response to the text modification prompt, providing (850) the modified first text string with the tone of the first text string changed for display; and
replacing (860) the first text string with the modified first text string within the message composition field of the messaging thread.
